Europäisches Patentamt

European Patent Office

Office européen des brevets

(19)

(11) Publication number : **0 483 040 A2**

(12) # EUROPEAN PATENT APPLICATION

(21) Application number : **91480159.2**

(22) Date of filing : **10.10.91**

(51) Int. Cl.[5] : **G06F 9/44**

(30) Priority : **23.10.90 US 601837**

(43) Date of publication of application :
**29.04.92 Bulletin 92/18**

(84) Designated Contracting States :
**DE FR GB**

(71) Applicant : **INTERNATIONAL BUSINESS MACHINES CORPORATION**
**Armonk, NY 10504 (US)**

(72) Inventor : **Krosner, Stephen Paul**
**2734 Eagle Ridge Rd.**
**Marietta, GA 30062 (US)**
Inventor : **Hammer, Emily Holland**
**4402 Paces Station Close**
**Atlanta, GA 30339 (US)**
Inventor : **Folmar, Dwight Marshall**
**1244 Winford Colony**
**Marietta, GA 30064 (US)**
Inventor : **Abraham, Robert Low**
**1990 Willeo Creek Point**
**Marietta, GA 30068 (US)**

(74) Representative : **Bonneau, Gérard et al**
**Compagnie IBM France Département de Propriété Intellectuelle**
**F-06610 La Gaude (FR)**

(54) **Method for displaying multiple entry data fields on a video screen in an object oriented software program.**

(57) A method for displaying multiple entry data fields on a computer video display in an object oriented software program. In an object, which, for example, may be a screen or panel having multiple entry data fields, the user may select a multiple entry data field by marking and choosing the appropriate entry. A pop-up panel or window is then displayed listing all of the instances of the data field or element. The user can change or delete the data element or add a new data element by selecting the appropriate function key. The user retains context of the underlying object while working on the multiple entry data fields. Moreover, the display of the underlying object is not changed when additional data elements are added to the multiple entry data field list.

FIG 5

EP 0 483 040 A2

This invention relates to a method for displaying data entry fields on a video screen of a computer in an object oriented software program. More specifically, this invention relates to a method for displaying related data entry fields having multiple values in an object oriented software program wherein related data elements in the multiple entry data fields can be added, deleted or changed.

Object oriented programming refers to a computer software programming language that focuses on real-world entities in the domain of the problem being solved and defines those entities as objects. The particular problem is decomposed into subproblems until all objects and subobjects in the problem domain have been identified.

Each object contains (encapsulates) some active data and a set of operations or routines (methods) that can access that data. When displayed on a video screen, an object may include, for example, a title, a single screen of data, instruction lines, data entry areas, menu areas or command lines. This displayed information must all fit within the physical confines of the video screen display, which generally consists of an area totalling 24 lines by 80 columns.

To maximize the amount of information related to a particular object that is displayed on the video screen, while maintaining the legibility of that information, certain display mechanisms (user interface constructs) have been employed, particularly in connection with displaying lists of information or items. In the case of data entry fields, these constructs typically access and display data fields individually; related fields must be accessed and displayed separately.

A basic user interface construct is the single-line entry field, which is a two-part user interface component consisting of text and a rectangular box into which the user enters information that is limited to one line. A related construct is the multiple-line entry field, which differs from the single-line entry field only in that the information inputted by the user consists of more than one line. In both of these constructs, the data fields are stored separately and accessed and displayed separately.

Another construct is the combination box, which is a user interface component that combines the capabilities of an entry field with a list of valid entries. Using a combination box, a user enters information in the entry field area and is provided with a list box containing possible choices to complete the entry field.

A drop-down combination box is a variation of the combination box in which the list box is hidden until the user requests it. An entry field box is displayed and the user is given a visual cue that a list is hidden. If the user requests it, the hidden list box will be displayed.

A drop-down list is similar to a drop-down combination box, but it does not include an entry field for entering text. Instead, the user sees a single selection field with one choice displayed as the default value and a visual cue indicating that a list box is hidden. If the user requests it, the hidden list will be displayed, from which a choice other than the default value may be selected.

As with the more basic constructs, data fields displayed in the list box constructs can only be accessed and displayed individually. Each list box displays a single column of data items with each row containing a single data item. None of these constructs provides a mechanism for accessing and displaying related fields in complete records containing multiple fields.

It is an object of the present invention to provide a method for displaying data entry fields having multiple values in an object oriented software program.

It is another object of the present invention to provide a method for displaying multiple entry data entry fields in an object oriented software program in the form of complete records containing multiple fields.

It is a further object of the present invention to provide a method for displaying multiple entry data entry fields in an object oriented software program wherein data elements in the multiple entry data fields can be added, deleted or changed while allowing the user to maintain the contextual relationships of the objects being altered.

These and other objects, features and advantages are achieved by a method for displaying multiple entry data fields on a computer video display in an object oriented software program. In an object, which, for example, may be a screen or panel having multiple entry data fields, the user may select a multiple entry data field by marking and choosing the appropriate entry. A pop-up panel or window, which is a user interface component similar to a drop-down list box, is then displayed listing all of the instances of the data field or element. The user can change or delete the data element or add a new data element by selecting the appropriate function key. The user retains context of the underlying object while working on the multiple entry data fields. Moreover, the underlying object is not changed when additional data elements are added to the multiple entry data field list.

Fig. 1 shows an embodiment of a panel as displayed on a video display screen having multiple entry data fields;

Fig. 2 shows a multiple entry data fields pop-up list for the embodiment of Fig. 1;

Fig. 3 shows a Change pop-up for the embodiment of Fig. 2;

Fig. 4 shows an Add pop-up for the embodiment of Fig. 2; and

Fig. 5 illustrates the actions the user performs and the responses made by the system to perform the Change, Add and Delete functions.

In object oriented programming, each object encapsulates some active data and a set of routines that can access that data. Data encapsulation allows access to an object's data only by the routines defined for that object. Users of object oriented software programs have direct access to all of the actions offered by the object and can only access data encapsulated therein by requesting the object to do so by performing one of its actions. The user need not know how these actions are performed. How the object implements its actions and how its internal data is arranged or formatted are encapsulated within a procedural framework that controls all access to the object.

Sets of objects that have similar, though not identical, characteristics and behave in the same way are called object classes. An object's class is a module that encapsulates everything known about an object and controls access to its data. An object's class defines the types and meanings of the object's data and the action requests that the object will honor.

Object classes can be defined to be subclasses of other classes. Subclasses inherit all of the data characteristics and routines of the parent class. Subclasses can, however, add additional data and routines and can redefine any data elements or routines of the parent class.

Each object in a class is characterized by a collection of common features that describe the data encapsulated in the class and the routines that can operate on the data. Class features are the attributes that make up each object of the class and the methods that can legitimately act on those attributes.

An attribute is a data element that stores a specified data type, such as a string, integer, or Boolean, and a method is a routine (action) that either acts on attributes or returns the value of an attribute. Each object in a class has the same attributes but these attributes have different values. An object that can be distinguished from others of the same class is an instance of that class. An instance is an individual object containing data (attributes) that can be acted on by an application or system.

Methods in an object-oriented system usually accomplish only one task. A class method only acts on class attributes and can return a result without using the instance attributes. An instance method, on the other hand, can act on both class and instance attributes.

A class attribute is a data element that has a constant value for all instances of the class. Class attributes consist of simple data types, such as integer, string or Boolean. An instance attribute is a data element with a value that can change for each instance of the class.

In object oriented systems, values of instance attributes are either simple data entry fields or object references. An object reference is an attribute with a value that is a reference to another object. An object reference can be the object's system ID or its memory address, depending on how the system is designed.

In certain applications, however, an instance attribute may comprise multiple data entry fields, rather than a single data entry field. Such multiple data entry fields, sometimes referred to as accordion fields, can be generally described as a list of simple data elements. Accordion fields are an intermediate method of displaying information in an object oriented software program, allowing the user to access and display records containing multiple fields, rather than individual fields, without being a full object or sub-object itself, thereby avoiding the additional programming and memory allocation requirements associated with objects.

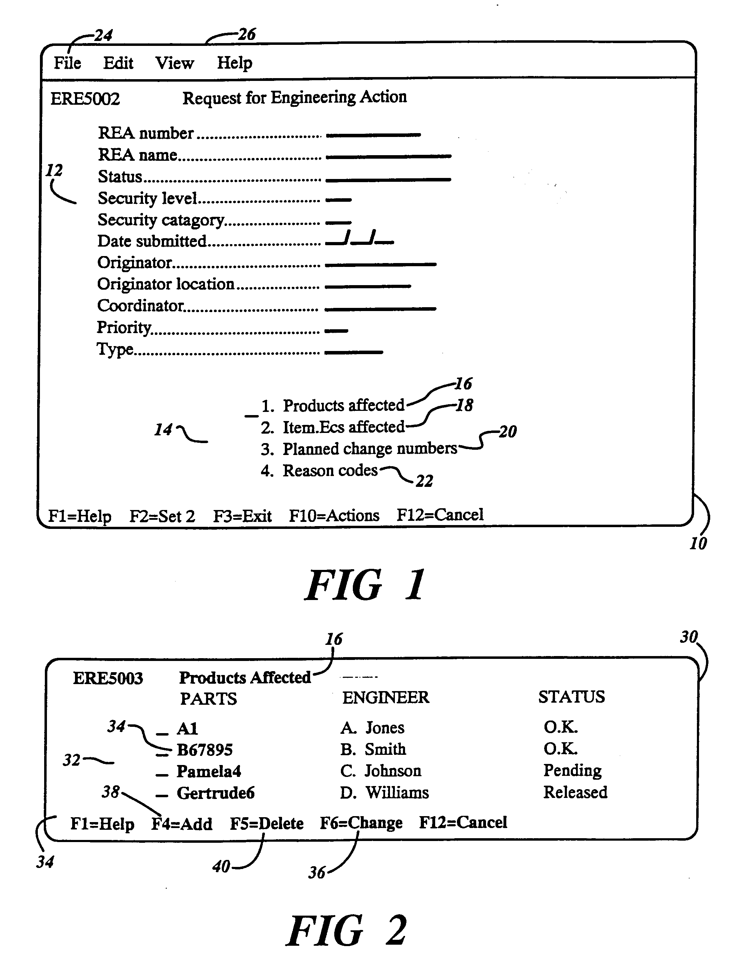

Referring to the embodiment shown in Fig. 1, an application program panel as displayed on a video display screen is shown including a series of single data entry fields 12 in the upper portion of the panel and a list of accordion fields 14 in the lower portion of the panel. In the panel shown, Products affected 16, Item.Ecs affected 18, Planned change numbers 20 and Reason codes 22 are accordion fields 14. Each of the accordion fields may represent a list of single-column or multi-column values.

To display the list of data values for an accordion field, the user selects one of the accordion fields 14 and then opens it by selecting the appropriate entry from the File 24 pull-down list (not shown) invoked from the action bar 26. For example, in Fig. 2, the user selects the Products Affected 16 accordion field and opens it by choosing File.Open from the action bar 26. The accordion field pop-up list 30 shown in Fig. 2 is displayed on the video screen, listing all related data entries 32, such as "B67895 B. Smith OK" 34, that are included in the selected Products Affected 16 accordion field. The pop-up list 30 also has function keys 34 that allow the user to Change 36, Add 38 to or Delete 40 from this list 30.

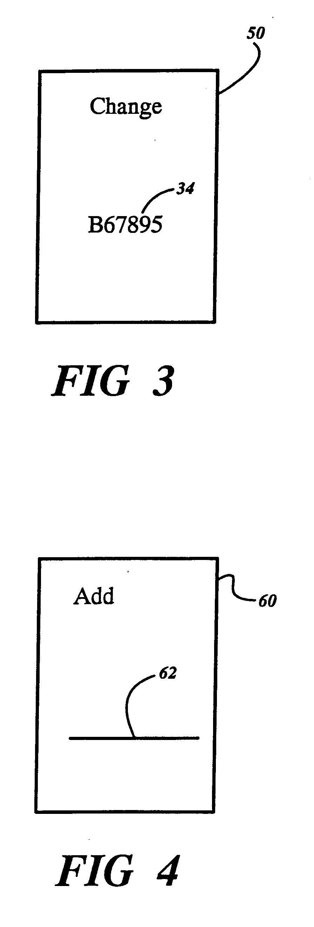

If the user chooses to change a data entry in the pop-up list 30 of Fig. 2, the entry to be modified is selected and then the Change function key 36 is selected. A Change pop-up 50, as shown in Fig. 3, is then displayed in which the selected data entry, "B67895 B. Smith OK" 34, is shown. The user can then type over the data entry 34 to correct the data. The user can then return to the pop-up list 30 of Fig 2., which will show the data entry 34 as modified.

If the user chooses to add a data entry to the pop-up list 30 of Fig. 2, the user first selects the location in the pop-up list 30 for the added entry by selecting an existing data entry. The user then selects the Add Function key 38 and the new data entry is inserted after the selected entry. If no data entry is-selected before the Add Function key 38 is selected, the new data entry is located at the top of the existing list of data entries. Once the Add Function key 38 is chosen, an Add pop-up 60 as shown in Fig. 4 is displayed and the user can enter the new data entry on the prompt line 62. The user can then return to the pop-up list 30 of Fig 2., which will be refreshed to show the data entry list 32 as modified.

If the user chooses to delete a data entry from the pop-up list 30 of Fig. 2, the user selects the data entry in the pop-up list 30 to be deleted and then selects the Delete function key 40. The selected data entry will be deleted from the pop-up list 30 of Fig. 2, which will be refreshed to show the data entry list as modified.

Once the user has completed all of the desired actions on the selected accordion field, the user can then remove the pop-up list 30 of Fig. 2 from the video display screen and return to the base panel (object) shown in Fig. 1. When the user saves the panel from which the pop-up list 30 originated, the update to the accordion field pop-up 30 is saved.

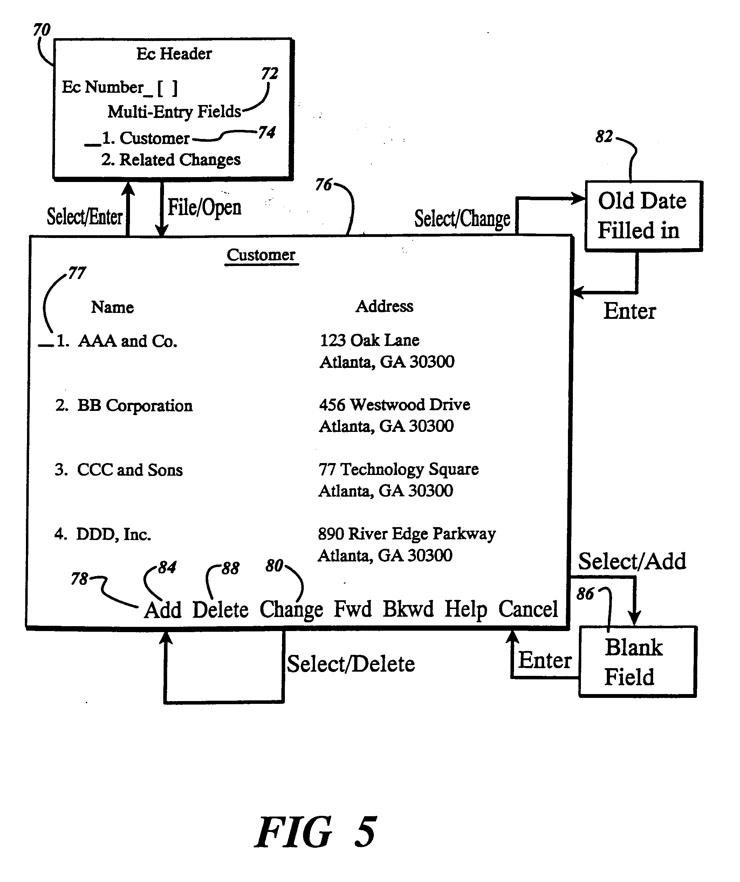

Fig. 5 shows a programming transition diagram of the Change, Add and Delete functional operations effected by the program instructions. The operation sequence begins with a display of a panel 70 including a list of multiple entry data fields 72. The user selects an accordion field, such as Customer 74, causing a pop-up list 76 of all data entries for the selected accordion field to be created and displayed. The user can then select a data entry, such as "AAA and Co. 123 Oak Lane Atlanta, GA 30300" 77, from pop-up list 76 and choose a function key 78 to perform an action on the selected data entry. By selecting the Change function key 80, a Change pop-up 82 is displayed containing the selected data entry "AAA and Co. 123 Oak Lane Atlanta, GA 30300" 77, which the user can modify and then return to pop-up list 76. By selecting the Add function key 84, an Add pop-up 86 is displayed in which the user enters the new data entry and then returns to pop-up list 76. By selecting the Delete function key 82, the selected data entry is deleted and the user is then returned to pop-up list 76. After completing all actions on the selected accordion field, pop-up list 76 is removed from the video display screen and the user is returned to panel 70.

The following is class specification source code shown in a dialect of ADA for the accordion field class "BAUPACCF" that controls the creation of accordion fields. Referring again to Fig. 5, when the user selects an accordion field from the multiple entry data fields list 72 of panel 70, the pop-up list 76 is created by initiating the Create routine beginning on line 194. The parameters for the Create routine include a list of the data entries for the selected accordion field. Once a data entry is selected and a function key is depressed, the Handle routine is invoked beginning on line 436, with the command name being the name of the function key chosen. If the Delete function key 88 is selected, the routine proceeds from line 504. The Fcancel routine beginning on line 400 removes the pop-up list 76 from the video display once the user completes all actions on the selected accordion field.

```
1 package body Accord_Field_Class is    -- BAUPACCF
2 --*******************************************************************
3 --*
4 --* MODULE NAME:          BAUPACCF
5 --*
6 --* DESCRIPTIVE NAME:     Accord_Field_Class
7 --*
8 --* CLASSIFICATION:
9 --*
10 --*                       OCO Source Materials
11 --*
12 --* STATUS:               FT|V1R1M0
13 --*
14 --* DESCRIPTION:          This is the accordion field class.
15 --*                       Accordion fields are used for objects that
16 --*                       have data elements that occur multiple times.
17 --*                       The data is displayed in a list and three
18 --*                       function keys are used to add, delete and
19 --*                       change elements in the list.
20 --*                       When creating an accordion field pop-up panel,
21 --*                       the application has to pass in a link list of
22 --*                       elements that inherit from disp_lnk_nd_class.
23 --*                       Applications can inherit this class.
24 --*
25 --* NOTES:                The application has to do the following to the
26 --*                       calling class:
27 --*                       1. Declare linked list(s) as instance
28 --*                       attributes. For example, if there are three
29 --*                       accordion fields, then declare three linked
30 --*                       lists.  The linked lists must contain elements
31 --*                       thatinherit from BAULKREC.
32 --*                       2. In the flopen method, declare a local
33 --*                       variable of a type that inherits from
34 --*                       Accord_Field_Class.  Create the accordion
35 --*                       field class that passes in the specified
36 --*                       linked list.
37 --*                       3. In the Fsave method, it is suggested that
38 --*                       the application delete all existing sub-objects
39 --*                       of the accordion field, then create new
40 --*                       sub-objects corresponding to the elements in
41 --*                       the linked list, although it is really up to
42 --*                       the application to do whatever it wants.
43 --*                       The application may also do additional
44 --*                       validation to each element in the linked list.
45 --*                       4. If you do not have classes which are
46 --*                       descendants of BAUPCHGP and BAUPADDP, then
47 --*                       rename and redefine the init method, call the
48 --*                       parent init method and do
49 --*                       assign_dtl_file for both Add_Popup and
50 --*                       Chg_Popup.
51 --*                       5. If you do have classes which are
52 --*                       descendants of BAUPCHGP and BAUPADDP, then
53 --*                       you must redefine the add and change methods
54 --*                       to do a create and then assign to Add_Popup
55 --*                       and Chg_Popup.
56 --*                       6. If you redefine the popup classes (BAUPADDP
```

```
--*        and BAUCHGP) to be in their own UOWs, then in
--*        the handle method of this class you must add
--*        Switch_UOW(parent.uow_id) statements around
--*        any calls to your parent's methods.
--*
--*        7. If the DTL for this class is defined to
--*        have two columns, then the following changes
--*        are necessary and in addition to the above:
--*            1. Redefine the change_node method and
--*               rename the inherited change_node.
--*            2. Add additional string parms to the
--*               change_node method for each additional
--*               column added to the DTL.
--*            3. In change_node, Add a call to
--*               assign_data for each
--*               additional column
--*
--*        Note: After an add, change or delete, the
--*        application stays on the popup until the
--*        enter or cancel key is pressed.
--*
--* MODULE TYPE:        Panel
--*
--* EXTERNAL REFERENCES:
--*                     Inherited Classes
--*                         BAUPOPLS       popup_plist_class
--*
--*                     Client Classes
--*                         BAOUWM         UNIT_OF_WORK_METACLASS
--*                         BAUDLND        Dyn_Lnk_Nd_Class
--*                         BAULKREC       Disp_Lnk_Nd_Class
--*                         BAUPADDP       Acc_Add_popup
--*                         BAUPCHGP       Acc_change_popup
--*                         BAUPDELT       Delete_popup
--*                         XABOOL         boolean
--*                         XAFRAME        FRAME_CLASS
--*                         XALNKLST       Link_List_Class
--*                         XALONG         LONG
--*                         XARCODE        Return_Code_Class
--*                         XASHORT        SHORT
--*                         XASTRING       STRING
--*
--*                     Non-Product Manager Modules
--*                         None
--*
--* EFFECTIVITY:        Effective
--*
--* USAGE:              PS
--*
--* UNIT OF WORK:
--*    GLOBAL INSTANCE:    NO
--*    COMMIT:             YES
--*    DISCARD:            NO
--*    MOVE OBJECT:        NO
--*    NEW:                NO
```

6

```
--*    NOTIFY:          NO
--*    ROLLBACK:        YES
--*    START:           YES
--*    SWITCH:          NO
--*
--* ISSUES ACTIVITY:
--* REFERENCE   DATE      PERSON   DESCRIPTION
--* ----------  --------  -------  ------------------------------------------
--*
--* CHANGE ACTIVITY:
--* REFERENCE   DATE      PERSON   DESCRIPTION
--* ----------  --------  -------  ------------------------------------------
--*             09/22/89  MN       Created
--* PTR9009797  12/14/89  BH       Modified
--* PTR9009806  01/02/90  BJB      Modified
--*             01/25/90  BJB      Redesign of add, change, validate and
--*                                term
--* DCR90404.2  03/20/90  SA       Added prolog
--*******************************************************************

-- EXPORT
   -- change_node,             --* defined below
   -- create,                  --* defined below
   -- display_popup,           --* inherited from BAUPOPLS
   -- dynamic_list,            --* inherited from BAUPOPLS
   -- pressed_escape;          --* inherited from BAUPOPLS

-- INHERIT Popup_plist_class;    --\CLS.BAUPOPLS\
   --    RENAME parent_create renames create;
   --    RENAME parent_init renames init;
   --    RENAME baupopls_ourinit renames ourinitialize;
   --    RENAME baupopls_handle renames handle;
   --    RENAME baupopls_fcancel renames fcancel;
   --    RENAME baupopls_term renames term;
   --    REDEFINE fcancel, handle, ourinitialize, change_node,
   --             term, dtl_file_name;

-- CLASS ATTRIBUTES
     dtl_file_name : STRING(DTL_NAME_SIZE) := "UIQ0003";
                                    --\ATR.dtl_file_name.XASTRING\
--* USAGE: PS
--* the apps should redefine or change this Dialog tag file to add
--* the title of their accordion field popup, and add more
--* information about the selection column.
     Add_Popup : Acc_Add_Popup;      --\ATR.Add_Popup.BAUPADDP\
--* USAGE: II
--* the accordion field add popup that is invoked
--* when the function key chosen is "add".
     Chg_Popup : Acc_Change_Popup; --\ATR.Chg_Popup.BAUPCHGP\
--* USAGE:  II
--* the accordion field change popup that is invoked
--* when the function key chosen is "change".

-- INSTANCE ATTRIBUTES
     Listx : Link_List_Cls;          --\ATR.Listx.XALNKLST\
                                     --\ATR.Listx.BAULKREC\
```

7

```
1┌                                                            ┐72
--* USAGE:  II
--* Listx is a linked list which contains the elements
--*    placed into the accordion field list popup.

-- CLASS METHODS

--****************************************************************
--*
--* METHOD NAME:        create
--*
--* DESCRIPTION:        This procedure creates an accordion field
--*                     instance.
--*
--* METHOD TYPE:        Procedure
--*
--* EFFECTIVITY:        Effective
--*
--* USAGE:              PS
--*
--* SYNTAX:             create(Obj_List)
--*
--* NOTES:              None
--*
--*
--****************************************************************
procedure create(                        --\MTH.create\
    Obj_List : in Link_List_Cls)  --\VAR.Obj_List.XALNKLST\
                                  --\VAR.Obj_List.BAULKREC\

        --* Obj_List - The linked list of accordion field
        --*             sub-objects to be updated.

        <*(* Create accordion field instance *)*> is

        UOW : UNIT_OF_WORK_METACLASS; --\VAR.UOW.BAOUWM\
        Level : SHORT;              --\VAR.Level.XASHORT\

    begin

    -- LOGIC

        UOW.uow_start(&Level);
        SELF.parent_create(&(*Instance));   --* instance is created in
                                            --* current UOW_level
        (*Instance).baupaccf_i_init(Obj_List);

    end create;


    -- INSTANCE METHODS


    --****************************************************************
    --*
    --* METHOD NAME:        add
    --*
                                                            ┘72
:└
```

8

```
--* DESCRIPTION:        This procedure creates the accordion add
--*                     pop-up panel.
--*
--* METHOD TYPE:        Procedure
--*
--* EFFECTIVITY:        Effective
--*
--* USAGE:              PS
--*
--* SYNTAX:             add(Node,Keyhole)
--*
--* NOTES:              If the application has a class that is a
--*                     descendent of BAUPADDP, then the user must
--*                     redefine this method and:
--*
--*                     1. Declare a local variable of the descendent
--*                     2. Do a create of that local variable
--*                     3. assign the local variable to Add_Popup
--*
--*                     EXAMPLE:
--*
--*                     xyz: ABC_Class;   -- ABC inherits from BAUPADDP
--*                     xyz.create(SELF, Listx, Node, Keyhole)
--*                     Add_Popup := xyz
--*
--*
--*********************************************************************
procedure add (                        --\MTH.add\
    Node : in Dyn_List_Nd_Class;  --\VAR.Node.BAUDLND\
    --* the node that needs to be changed
    --* from Add, the node will have nothing assigned
    --* on the data column yet.
    Keyhole : in LONG)             --\VAR.Keyhole.XALONG\
    --* the first row on the list when the list is
    --* refreshed

    <*(* Create the accordion add popup *)*> is

begin

-- LOGIC

    Add_Popup.create(SELF, Listx, Node, Keyhole);

end add;


--*********************************************************************
--*
--* METHOD NAME:        change
--*
--* DESCRIPTION:        This procedure creates the accordion change
--*                     pop-up panel.
--*
--* METHOD TYPE:        Procedure
--*
```

```
--* EFFECTIVITY:          Effective
--*
--* USAGE:                PS
--*
--* SYNTAX:               change(Node,Keyhole,Data)
--*
--* NOTES:                If the application has a class that is a
--*                       descendant of BAUPCHGP, then the user must
--*                       redefine this method and:
--*
--*                       1. Declare a local variable of the descendant
--*                          type
--*                       2. Do a create of that local variable
--*                       3. Assign the local variable to Chg_Popup
--*
--*                       EXAMPLE:
--*
--*                         xyz: ABC_Class;   -- ABC inherits from BAUPCHGP
--*                         xyz.create(SELF, Listx, Node, Keyhole)
--*                         Chg_Popup := xyz
--*
--********************************************************************
procedure change (                    --\MTH.change\
    Node : in Dyn_List_Nd_Class;      --\VAR.Node.BAUDLND\
    --* the node that needs to be changed
    Keyhole : in LONG;                --\VAR.Keyhole.XALONG\
    --* the first row on the list after the list is
    --* refreshed
    Data : in STRING)                 --\VAR.Data.XASTRING\
    --* the data displayed in the change popup



    <*(* Create the accordion change popup *)*> is

begin

-- LOGIC

    Chg_Popup.create(SELF, Listx, Node, Keyhole, Data);

end change;


--********************************************************************
--*
--* METHOD NAME:          change_node
--*
--* DESCRIPTION:          This procedure changes an existing node.
--*
--* METHOD TYPE:          Procedure
--*
--* EFFECTIVITY:          Effective
--*
--* USAGE:        :       II
--*
```

```
--* SYNTAX:              change_node(Node,Keyhole,Obj_ref,Data_in)
--*
--* NOTES:               If columns are added to the DTL for this
--*                      panel, then this method must be renamed and
--*                      redefined.  Add string parameters and a
--*                      call to 'assign_data' for each
--*                      additional column.
--*
--*******************************************************************
procedure change_node(                    --\MTH.change_node\
    Node : in Dyn_List_Nd_Class;      --\VAR.Node.BAUDLND\
    --* the node that is changed
    --* from Add, the node will have nothing assigned
    --* on the data column yet.
    Keyhole : in LONG;                --\VAR.Keyhole.XALONG\
    --* the first row on the list after the list is
    --* refreshed
    Obj_ref : in FRAME_CLASS;         --\VAR.Obj_ref.XAFRAME\
    --* Object reference
    Data_in : in STRING)              --\VAR.Data_in.XASTRING\
    --* the data to be assigned to the node


         <*(* Change an existing node *)*> is

begin
--LOGIC

    <*(* Assign the tag - object reference - to the node *)*> is
         Node.assign_tag(Obj_ref);

    <*(* Assign the data into the node's data column *)*> is
      Node.assign_data("COL1", Data_in);

    <*(* Set the node's display indicator to true because
         the node is displayable now that it contains
         data *)*> is
         Node.set_displayed(TRUE);

    <*(* Refresh the List *)*> is
      SELF.regenerate("ACRDLST", Keyhole);

end change_node;

--*******************************************************************
--*
--* METHOD NAME:         fcancel
--*
--* DESCRIPTION:         This procedure cancels the accordion list
--*                      pop-up panel.
--*
--* METHOD TYPE:         Procedure
--*
--* EFFECTIVITY:         Effective
--*
--* USAGE:               II
```

11

```
1                                                                      72
--*
--* SYNTAX:              fcancel
--*
--* NOTES:              None
--*
--*
--*****************************************************************
procedure fcancel                       --\MTH.fcancel\

    <*(* Cancel popup *)*> is


    UOW : UNIT_OF_WORK_METACLASS;  --\VAR.UOW.BAOUWM\
    --* the unit of work

begin
--LOGIC

    SELF.baupopls_fcancel;

end fcancel;

--*****************************************************************
--*
--* METHOD NAME:         handle
--*
--* DESCRIPTION:         This procedure handles the function key
--*                      the user chose.
--*
--* METHOD TYPE:         Procedure
--*
--* EFFECTIVITY:         Effective
--*
--* USAGE:               II
--*
--* SYNTAX:              handle(command,did_I)
--*
--* NOTES:               This code is invoked when a function key is
--*                      pressed. The command name is the dialog tag
--*                      language name of a function key.
--*
--*
--*****************************************************************
procedure handle (                      --\MTH.handle\
        command : in STRING;            --\VAR.command.XASTRING\
        did_I : out BOOLEAN)            --\VAR.did_I.XABOOL\

    --* command - function key that was chosen.
    --* did_I - If true, indicates that the command was
    --*   handled.

    <*(* Handle the command *)*> is

    --* Local Variables
    RC : RETURN_CODE_CLASS;           --\VAR.RC.XARCODE\
    --* a return code
```

```
        DeltPan : Delete_Popup;           --\VAR.DeltPan.BAUPDELT\
        --* the delete confirmation popup
        UOW : UNIT_OF_WORK_METACLASS; --\VAR.UOW.BAOUWM\
        --* the unit of work
        VoidNode : Dyn_List_Nd_Class; --\VAR.VoidNode.BAUDLND\
        --* a void node used as a parameter to the method
        --* list_in_error.  A void node is passed because the error
        --* points to a list panel, not to a specific node
        done : BOOLEAN;                   --\VAR.done.XABOOL\
        --* indicates the end of a loop
        Row : LONG;                       --\VAR.Row.XALONG\
        --* used to find a row number
        SomeNode : Dyn_List_Nd_Class; --\VAR.SomeNode.BAUDLND\
        --* dynamic list node, used to assign the node to
        --* added or deleted.
        Keyhole : LONG;                   --\VAR.Keyhole.XALONG\
        --* the first row in the panel after the list is refreshed.
        Select_List : Link_List_Cls;    --\VAR.Select_List.XALNKLST\
                                          --\VAR.Select_List.BAUDLND\

        data : STRING(DTL_LONGEST_SIZE);
                                          --\VAR.data.XASTRING\
        --* data displayed on the change popup
        last : boolean;                   --\VAR.last.XABOOL\
        reset : boolean;                  --\VAR.reset.XABOOL\
        curr_elem : disp_lnk_nd_class; --\VAR.curr_elem.BAULKREC\
        obj : Frame_class;                --\VAR.obj.XAFRAME\


begin
-- LOGIC
        --* This code is invoked when a user presses a function key.
        --* The command name is the name tied to the function key.

        RC.create;
        RC.assign_rc(1, FALSE);
        if (C.strcmp(command, "ADD") = 0) then
          --* if the command is Add
          SELF.add_node(&SomeNode, &Keyhole);
          --* adds the new node (although it doesn't contain
          --* the data yet) to the list
          SELF.add(SomeNode, Keyhole);
          Add_Popup.display_popup;
          --* Create an add popup passing in SELF, the linked
          --* list of elements that inherit from BAULKREC,
          --* the new node, and the keyhole, then display it.
          if (Add_Popup.pressed_escape) then
            --* if the Add_Popup is cancelled
            SELF.delete_new_node(SomeNode);
            --* Delete the created node
          else --* if the result of the Add_Popup is to add the node
            <*(* NOP. *)*>;
          end if;
          *did_I := TRUE;
          --* Set did_I to True, indicating that the command was
          --* handled.
        elsif (C.strcmp(command, "DELETE") = 0) then
```

72

72

13

```
--* if the command is Delete
<*(* Make a confirmation panel appear on the previous
   panel. *)*> is
SELF.set_recog_this_chg(TRUE);
SELF.get_sellst_chcs("ACRDLST", &Select_List);
if (Select_List.Nb_Elements > 0) then
    --* if there was a node or list of nodes selected
    --* to be deleted, then find the new keyhole.
    SELF.find_keyhole('D', &Keyhole);
    --* Create a delete confirmation popup, then
    --* display it.
    DeltPan.create;
    DeltPan.display_popup;
    --* if the user selected to delete the selected nodes.
    if (C.strcmp(DeltPan.Result, "DELETE") = 0) then
      done := FALSE;
      Select_List.move_to_last;
      --* Save the current pointer in the app list.
      curr_elem := Listx.current_value;
      reset := FALSE;
      --* Loop through the list of elements that inherits
      --* from BAULKREC, and delete elements that were in
      --* the selected list.
      while (not done) loop
         --* find the row number of the current element
         --* within the dynamic list.  The row number
         --* of this element within the dynamic list is
         --* the same within the list of elements that
         --* inherit from BAULKREC (the application list).
         dynamic_list.List.find_row(
             Select_List.current_value, &Row);
         --* Move to this row in the application list.
         Listx.move_to(Row);
         --* If this row equals the current pointer that
         --* is being saved, then we must reset the current
         --* pointer.
         obj := listx.current_value;
         if (obj.eq(&curr_elem) = TRUE) then
           --* Set the reset flag to TRUE if there are more
           --* elements than 1.
           if (Listx.nb_elements > 1) then
              reset := TRUE;
           else
              reset := FALSE;
           end if;
         else
           --* Otherwise, set the reset flag to FALSE.
           reset := FALSE;
         end if;
         --* Delete this element from the application list.
         Listx.delete_current;
         --* If we need to reset the current pointer, then
         --* set it to the new current pointer
         --* in the list.
         if (reset) then
             curr_elem := Listx.current_value;
```

14

```
            reset := FALSE;
        end if;
        --* Move the list buffer to the selected row.
        dynamic_list.List.move_to(Row);
        --* Delete this row from the list buffer.
        dynamic_list.List.delete_current;
        --* Remove this element from the list of selected
        --* elements.
        Select_List.delete_current;
        --* If there are no more selected elements, then we
        --* are finished.
        if (Select_List.nb_elements = 0) then
            --* no more nodes to process
            done = TRUE;
        else
            <*(* nop *)*>;
        end if;
    end loop;
    --* If there are elements left in the application list,
    --* then reset the current pointer.
    if (Listx.nb_elements > 0) then
        last := FALSE;
        Listx.move_to_first;
        --* Loop through the application and reset the current
        --* pointer.
        while (not last) loop
            obj := listx.current_value;
            --* If the current pointer equals the saved current
            --* pointer, then it has been reset.
            if (obj.eq(&curr_elem) = TRUE) then
                --* Set the loop control to exit the loop.
                last := TRUE;
            else
                --* Otherwise, move to the next element in the list.
                Listx.move_to_next(&last);
            end if;
        end loop;
    end if;
    --* Refresh the list from the new keyhole.
    if (Keyhole > dynamic_list.list_size) then
    --* if keyhole is bigger than the list, then set the
    --* keyhole to be the same top visible row.
        Keyhole := dynamic_list.list_size;
        if (Keyhole < 0) then
            Keyhole := 0;
        end if;
    end if;
    SELF.regenerate("ACRDLST", Keyhole);
else --* if the result of the delete confirmation panel
    --* is to resume processing
    <*(* NOP *)*>;
end if;
else --* nothing was selected to be deleted
    --* Something should have been selected before this
    --* action
    RC.push_msg_info(-1, "EKNU032");
```

```
1
                                                                              72
              SELF.list_in_error("ACRDLST", VoidNode, RC.MsgLog);
          end if;
          *did_I := TRUE;
        elsif (C.strcmp(command, "CHANGE") = 0) then
          --* if the command is Change
          SELF.find_node_to_open(&SomeNode, &Keyhole, &RC);
          --* finds the node to change and finds the keyhole
          if (RC.ok) then
            SomeNode.read_data("COL1", &data);
            SELF.change(SomeNode, Keyhole, data);
            Chg_Popup.display_popup;
            --* Create a change popup passing in SELF, the linked
            --* list of elements that inherit from BAULKREC, the
            --* new node, and the keyhole, then display it.
            --* Set did_I to True, indicating that the command was
            --* handled.
          else
            --* NOP,  the error message was already assigned by
            --* find_node_to_open.
          end if;
          *did_I := TRUE;
        else
          *did_I := FALSE;
        end if;

        <*(* If I don't know what to do with it, maybe the handlers
                I inherited from BAUPANEL. *)*> is
        if (not (*did_I)) then
          SELF.baupopls_handle(command, did_I);
        else
          <*(* NOP *)*>;
        end if;


    end handle;

    --*******************************************************************
    --*
    --* METHOD NAME:          init
    --*
    --* DESCRIPTION:          This procedure initializes the accordion
    --*                       list pop-up panel.
    --*
    --* METHOD TYPE:          Procedure
    --*
    --* EFFECTIVITY:          Effective
    --*
    --* USAGE:                PS
    --*
    --* SYNTAX:               init(Obj_List)
    --*
    --* NOTES:                None
    --*
    --*
    --*******************************************************************
    procedure init (                    --\MTH.init\
1                                                                              72
```

```
1                                                                    72
        Obj_List : in Link_List_Cls)    --\VAR.Obj_List.XALNKLST\
                                        --\VAR.Obj_List.BAULKREC\

        --* Obj_List - The linked list of accordion field
        --*                 sub-objects.

        <*(* Initialize the accordion field popup instance *)*> is

    begin
    -- LOGIC

      --* assign the application linked list to the panel.
          SELF.assign_list("ACRDLST", Obj_List);

      --* bring app's list up to current UOW_level.
          Obj_List.notify;

      --* Assign the instance attribute pointer to the application list.
          Listx := Obj_List;

    end init;

    --*******************************************************************
    --*
    --* METHOD NAME:        ourinitialize
    --*
    --* DESCRIPTION:        This procedure assigns the panel type
    --*                     to be the accordion panel type.
    --*
    --* METHOD TYPE:        Procedure
    --*
    --* EFFECTIVITY:        Effective
    --*
    --* USAGE:              II
    --*
    --* SYNTAX:             ourinitialize
    --*
    --* NOTES:              None
    --*
    --*
    --*******************************************************************
    procedure ourinitialize            --\MTH.ourinitialize\

        <*(* Initialize the panel type *)*> is

    begin

    -- LOGIC
        SELF.baupopls_ourinit;
      --* assign the panel type as an accordion field popup.
          SELF.assign_panel_type(accrd_panel_type);

    end ourinitialize;

    --*******************************************************************
    --*
1                                                                    72
```

17

```
--* METHOD NAME:          term
--*
--* DESCRIPTION:          This procedure terminates the accordion
--*                       list pop-up panel.
--*
--* METHOD TYPE:          Procedure
--*
--* EFFECTIVITY:          Effective
--*
--* USAGE:                PS
--*
--* SYNTAX:               term
--*
--* NOTES:                The applications may redefine this method if
--*                       they want the message for the failed unit of
--*                       work commit, to be more specific.  Example,
--*                       a more specific message can be "List of
--*                       Affected Items cannot be saved."
--*
--*******************************************************************
  procedure term                          --\MTH.term\


    <*(* Terminate the popup *)*> is

    --* Local Variables
    RC : RETURN_CODE_CLASS;          --\VAR.RC.XARCODE\
    --* a return code
    UOW : UNIT_OF_WORK_METACLASS; --\VAR.UOW.BAOUWM\
    --* the unit of work
    VoidNode : Dyn_List_Nd_Class; --\VAR.VoidNode.BAUDLND\
    --* a void node used as a parameter to the method
    --* list_in_error.  A void node is passed since
    --* the error points to a list panel,not a specific node

  begin
  -- LOGIC
  --* Create the local return code.
    RC.create;

  <*(* Commit the changes *)*> is
    UOW.uow_commit(&RC);
    if (RC.ok) then
    <*(* If the accordion had a change then cause a
        confirmation to be shown on the parent panel. *)*> is
      if (recog_this_chg) then
        if (not parent.VOID) then
          parent.set_recog_this_chg (TRUE);
        end if;
      end if;

    --* Call the parent term method.
      SELF.baupopls_term;
    else
    --* The commit failed so rollback this UOW level.
      UOW.uow_rollback;
```

18

```
   --* This data cannot be saved.
      RC.push_msg_info(-1, "EKNU026");
      SELF.list_in_error("ACRDLST", VoidNode, RC.MsgLog);
      RC.New_Msg;
      end if;

   --* Delete the local return code.
      RC.delete;
   end term;

   end Accord_Field_Class;
```

The following is the class specification source code shown in a dialect of ADA for the accordion add pop-up "BAUPADDP" that is invoked when the user selects the Add function key 84. Once the user depresses the Add function key 80, the Add routine from "BAUPACCF" proceeds from line 484 and creates "BAUPADDP". The Add pop-up 86 is created by initiating the Create routine beginning on line 171 of "BAUPADDP". Once the user enters an addition to the pop-up list 76, the validate routine beginning on line 349 validates the data entered and inserts it into the pop-up list 76.

```
package body Acc_Add_Popup is                          -- BAUPADDP
--***********************************************************************
--*
--* MODULE NAME:        BAUPADDP
--*
--* DESCRIPTIVE NAME:   Acc_Add_Popup
--*
--* CLASSIFICATION:
--*
--*                     OCO Source Materials
--*
--* STATUS:             FT|V1R1M0
--*
--* DESCRIPTION:        This pop-up is displayed when the user choses
--*                     the add function key from the accorion list
--*                     pop-up panel.  This pop-up contains a single
--*                     data entry field for the user to enter the
--*                     new data to be added to the accordion field
--*                     list.
--*
--* NOTES:              This popup contains a single entry field.
--*                     The application inherits from this popup, and
--*                     should change the Dialog tag file to specify
--*                     the panel title, entry field title, and entry
--*                     field width.  (and all other dialog tag files
--*                     like UIQ0004)  The validate method in this
--*                     class is effective, but the application should
--*                     redefine the app_validate method if validation
--*                     is needed on the data entry field and/or the
--*                     data is not being stored in a list frame string
--*                     frame element.  After the data has been
--*                     validated, it is inserted into the
--*                     application linked list of elements
--*                     (that inherits from BAULKREC); and the
--*                     "change_node" from BAUPLIST is invoked
--*                     to insert the data into the dialog tag column.
--*
--*                     If the accordion field list panel has been
--*                     redefined due to additional columns in the
--*                     DTL, then this class must be redefined in
--*                     the following ways:
--*                         1. Redefine the 'accord' attribute to
--*                            be of the redefined BAUPACCF type.
--*                         2. Rename and redefine App_Validate.  Add
--*                            string parameters for the additional
--*                            data in the object.
--*                         3. Redefine Validate to do 'read_data_entry'
--*                            for all the data entry fields on the
--*                            popup.  Define local string variables
--*                            to read the additional data.  (Can still
--*                            use the 'add_field' attribute for one.)
--*                            Then should do the same things
--*                            as BAUPADDP validate.
--*
--*
```

72

```
--* MODULE TYPE:        Panel
--*
--* EXTERNAL REFERENCES:
--*                     Inherited Classes
--*                         BAUPOPAN    popup_panel_class
--*
--*                     Client Classes
--*                         BAOSESSM    Session_Metaclass
--*                         BAUDLND     Dyn_List_Nd_Class
--*                         BAULKREC    Disp_Lnk_Nd_Class
--*                         BAUPACCF    Accord_Field_Class
--*                         BAUSF       STRING_FRAME
--*                         PD1REF      reference_dsgntr
--*                         XABOOL      boolean
--*                         XAFRAME     FRAME_CLASS
--*                         XALNKLST    Link_List_Class
--*                         XALONG      LONG
--*                         XARCODE     Return_Code_Class
--*                         XASTRING    STRING
--*
--*                     Non Product Manager Modules
--*                         None
--*
--* EFFECTIVITY:        Effective
--*
--* USAGE:              PS
--*
--* UNIT OF WORK:
--*   GLOBAL INSTANCE:  NO
--*   COMMIT:           NO
--*   DISCARD:          NO
--*   MOVE OBJECT:      NO
--*   NEW:              NO
--*   NOTIFY:           NO
--*   ROLLBACK:         NO
--*   START:            NO
--*   SWITCH:           NO
--*
--* ISSUES ACTIVITY:
--* REFERENCE   DATE      PERSON   DESCRIPTION
--* ---------- -------- -------- ------------------------------------
--*
--* CHANGE ACTIVITY:
--* REFERENCE   DATE      PERSON   DESCRIPTION
--* ---------- -------- -------- ------------------------------------
--*             09/24/89 MN       Created.
--* PTR9009803 12/13/89 BH        Modified.
--*             12/14/89 BH       Added export clause for pressed_escape.
--*             01/19/90 BJB      App_validate is effective and sets
--*                              OK = TRUE.
--* DCR90404.2 03/15/90 SA        Added prolog.
--********************************************************************

-- EXPORT
   -- app_validate,                    --* defined below
   -- assign_dtl_file,           .     --* inherited from BAUPANEL
```

```
1 ┌                                              --* defined below
      -- create,                                 --* inherited from BAUPOPAN
      -- display_popup,                          --* inherited from BAUPOPUP
      -- pressed_escape,                         --* defined below
      -- validate;

    --INHERIT Popup_panel_class;        --\CLS.BAUPOPAN\
      --RENAME parent_create renames create;
      --RENAME parent_init renames init;
      --REDEFINE validate, dtl_file_name;

    --CLASS ATTRIBUTES
        dtl_file_name : STRING(DTL_NAME_SIZE) := "UIQ0004";
                                        --\ATR.dtl_file_name.XASTRING\
        --* USAGE:  PS
        --* the Dialog Tag File name

    --INSTANCE ATTRIBUTES
        Accord : Accord_Field_Class;  --\ATR.Accord.BAUPACCF\
        --* USAGE:  II
        --* the parent popup to which a new node is added
        Listx : Link_List_Cls;        --\ATR.Listx.XALNKLST\
                                      --\ATR.Listx.BAULKREC\
        --* USAGE:  II
        --* the list of elements that inherit from BAULKREC
        --* to which a new element is added
        AddNode : Dyn_List_Nd_Class;  --\ATR.AddNode.BAUDLND\
        --* USAGE:  II
        --* the new node on the accordion field popup.
        Keyhole : LONG;               --\ATR.Keyhole.XALONG\
        --* USAGE:  II
        --* the first row on the accordion field popup
        --* when it's refreshed.
        Add_Field : STRING(DTL_LONGEST_SIZE);
                                      --\ATR.Add_Field.XASTRING\
        --* USAGE:  II
        --* the data from the entry field

    --CLASS METHODS

    --***************************************************************
    --*
    --* METHOD NAME:        create
    --*
    --* DESCRIPTION:        This procedure creates an instance of the
    --*                     accordion field add panel.
    --*
    --* METHOD TYPE:        Procedure
    --*
    --* EFFECTIVITY:        Effective
    --*
    --* USAGE:              PS
    --*
    --* SYNTAX:             create(AccField,List,NewNode,FirstRow)
    --*
    --* NOTES:          :   None
    --*
1 └
```

```
1 ┌                                                                    ┐72
--*
--******************************************************************
procedure create(                        --\MTH.create\
     AccField : in Accord_Field_Class;
                                --\VAR.AccField.BAUPACCF\
     --* the parent popup to which a new node is added
     List : in Link_List_Cls;      --\VAR.List.XALNKLST\
                                --\VAR.List.BAULKREC\
     --* the list of elements to which a new element is added
     NewNode : in Dyn_List_Nd_Class;
                                --\VAR.NewNode.BAUDLND\
     --* the new node on the accordion field popup.
     FirstRow : in LONG)          --\VAR.FirstRow.XALONG\
     --* the first row on the accordion field popup
     --* when it's refreshed.

     <*(* Create an instance of the popup *)*> is

begin
--LOGIC

     SELF.parent_create(&(*Instance));
     (*Instance).baupaddp_i_init(AccField, List, NewNode, FirstRow);

end create;


--INSTANCE METHODS
--******************************************************************
--*
--* METHOD NAME:         app_validate
--*
--* DESCRIPTION:         This procedure creates a new string_frame
--*                      to be inserted into the list.
--*
--* METHOD TYPE:         Procedure
--*
--* EFFECTIVITY:         Effective
--*
--* USAGE:               PS
--*
--* SYNTAX:              app_validate(Field_To_Validate,New_Element,OK)
--*
--* NOTES:               This method should be renamed and redefined
--*                      to add validation of the data.  If the list
--*                      element is not a string frame then just
--*                      completely redefine this method to do the
--*                      creation.
--*
--*                      If there is more than 1 data entry field,
--*                      then add string parameters for the data for
--*                      each additional field.
--*
--*
--******************************************************************
procedure app_validate(              --\MTH.app_validate\
1 └                                                                    ┘72
```

23

```
        Field_to_Validate : in out STRING;
                            --\VAR.Field_to_Validate.XASTRING\
        --* The field that needs to be validated
        New_Element : out String_Frame;
                            --\VAR.New_Element.BAUSF\
        --* The accordion field element that is inserted into
        --* the linked list
        OK : out BOOLEAN)        --\VAR.OK.XABOOL\
        --* Indicates if the validate is successful.


        <*(* Validate the data field and do necessary
            assignment *)*> is

        --* This is a template method

        --* Local Variables
        --* Element : type of element, for example
        --* Ref_Des : Reference_Dsgntr;   --\VAR.Ref_Des.PD1REF\

        --* RC : RETURN_CODE_CLASS;        --\VAR.RC.XARCODE\
        --* Session : Session_Metaclass;  --\VAR.Session.BAOSESSM\

--LOGIC
    begin
      (*New_Element).create(Field_to_Validate);
       *OK := TRUE;

        --* do the necessary validation
        --* if (the validate is successful) then
        --*   convert the string data (Field_To_Validate)
        --*   to whatever type applicable...
        --*   For example:
        --*   Ref_Des.create(....); --* create the element
        --*   the displayable attribute of Ref_Des is Ref_Dsgntr,
        --*   which is an NLS_STRING, so the data field (which
        --*   is a string) is assigned to an NLS_STRING
        --*   Ref_Des.Ref_Dsgntr.assign(Field_To_Validate,
        --*              Session.Session_CCSID, RC);
        --*   if (RC.ok) then
        --*     do other assignments to the new element if necessary
        --*     assign the new element to New_Element
        --*     New_Element := Ref_Des;
        --*     OK := TRUE;
        --*   else
        --*     OK := FALSE;
        --*   end if;
        --* else --* if the validate is not successful
        --*   OK := FALSE;
        --* end if;

        --* Again, this is just a template and the application's
        --* implementation can differ.

    end app_validate;
```

```
1                                                                    72
 --***********************************************************************
 --*
 --* METHOD NAME:        init
 --*
 --* DESCRIPTION:        This procedure initializes the accordion
 --*                     field add panel.
 --*
 --* METHOD TYPE:        Procedure
 --*
 --* EFFECTIVITY:        Effective
 --*
 --* USAGE:              PS
 --*
 --* SYNTAX:             init(AccField,List,NewNode,FirstRow)
 --*
 --* NOTES:              None.
 --*
 --*
 --***********************************************************************
 procedure init(                        --\MTH.init\
     AccField : in Accord_Field_Class;
                                        --\VAR.AccField.BAUPACCF\
        --*  New node added to the parent popup
     List : in Link_List_Cls;       --\VAR.List.XALNKLST\
                                    --\VAR.List.BAULKREC\
        --*  New element added to the list of elements
     NewNode : in Dyn_List_Nd_Class;
                                    --\VAR.NewNode.BAUDLND\
        --* the new node on the accordion field popup.
     FirstRow : in LONG)            --\VAR.FirstRow.XALONG\
        --* the first row on the accordion field popup
        --* when it is refreshed.

     <*(* Initialize the popup instance *)*> is

 begin
 --LOGIC

     Accord := AccField;
     Listx := List;
     AddNode := NewNode;
     Keyhole := FirstRow;

 end init;

 --***********************************************************************
 --*
 --* METHOD NAME:        validate
 --*
 --* DESCRIPTION:        This procedure validates the data entered,
 --*                     and if it is valid, inserts it into the
 --*                     accordion field pop-up list.
 --*
 --* METHOD TYPE:        Procedure
 --*
 1                                                                    72
```

```
--* EFFECTIVITY:        Effective
--*
--* USAGE:              II
--*
--* SYNTAX:             validate(ok)
--*
--* NOTES:              If there is more than 1 data entry field
--*                     on this popup, then this method must be
--*                     redefined to read all the data entry fields
--*                     and pass the data into change_node.
--*
--*******************************************************************
procedure validate(                    --\MTH.validate\
    ok : out BOOLEAN)                  --\VAR.ok.XABOOL\

    <*(* Validate the data entered and if it's valid, insert
         it to the accordion field popup list. *)*> is

    --* Local Variables
    Row : LONG;                        --\VAR.Row.XALONG\
    --* used to find the row number of the new element
    New_Element : Frame_Class;
                                       --\VAR.New_Element.XAFRAME\
    --* The accordion field element that is inserted into
    --* the linked list
    curr_elem : disp_lnk_nd_class;    --\VAR.curr_elem.BAULKREC\
    --* Temporary holder for current pointer in the application
    --* list.
    last     : boolean;                --\VAR.last.XABOOL\
    frame    : Frame_Class;            --\VAR.frame.XAFRAME\


begin
--LOGIC

    <*(* Get the data from the popup *)*> is
        SELF.read_data_entry("ADDFLD", &Add_Field);
        --* read the data in the entry field
        SELF.app_validate(&Add_Field, &New_Element, ok);
        --* call the application validate to validate
        --* this field.
        if (*ok) then
          --* the field is valid. Insert the data into
          --* new node in the accordion field popup.
          Accord.change_node(AddNode, Keyhole, New_Element,
                             Add_Field);
          --* insert the new data into the application
          --* linked list
          Accord.dynamic_list.list.find_row(AddNode, &Row);
          if (Row = 1) then
            --* check if new node is top one.
            Listx.insert_first(New_Element);
            --* was top node, so top in appl too.
          else
            curr_elem := Listx.Current_value;
            Listx.move_to(Row-1);
```

72

EP 0 483 040 A2

```
                                                                          72
      i
        --* to appl row corresponding to row above added node.
        Listx.insert_after(New_Element);
        --* insert after this 'prior' row.
        last := FALSE;
        Listx.move_to_first;
        --* Reset the current pointer to the application list.
        while (not last) loop
           frame := listx.current_value;
           if (frame.eq(&curr_elem) = TRUE) then
              last := TRUE;
           else
              Listx.move_to_next(&last);
           end if;
        end loop;
      end if;

   <*(* Pass back the fact that a change was made. *)*> is
      parent.set_recog_this_chg(TRUE);

   else --* if the application validation failed
      *ok := FALSE;
   end if;

end validate;

end Acc_Add_Popup;
```

The following is the class specification source code shown in a dialect of ADA for the accordion change pop-up "BAUPCHGP" that is invoked when the user selects the Change function key 80. Once the use r depresses the Change function key 80, the Change routine from "BAUPACCF" proceeds from line 627 and creates "BAUPCHGP". The Change pop-up 82 is created by initiating the Create routine beginning on line 170. Once the user modifies the selected data entry, the validate routine beginning on line 371 validates the data entered and updates the pop-up list 76.

EP 0 483 040 A2

```
package body Acc_Change_Popup is                    --BAUPCHGP
--*********************************************************************
--*
--* MODULE NAME:          BAUPCHGP
--*
--* DESCRIPTIVE NAME:     Acc_Change_Popup
--*
--* CLASSIFICATION:
--*
--*                       OCO Source Materials
--*
--* STATUS:               FT|V1R1M0
--*
--* DESCRIPTION:          This pop-up window allows the user to change
--*                       a selected element in an accorion field list.
--*
--* NOTES:                This popup contains a single entry field.
--*                       The application inherits from this popup, and
--*                       should change the Dialog Tag File (DTF) to
--*                       specify panel title, entry field title, and
--*                       the entry field width. (and all other dialog
--*                       tag files same as UIQ0005)
--*
--*                       The validate method in this class is effective,
--*                       but the application should redefine the
--*                       app_validate method if validation is needed on
--*                       the data entry field, and/or the data is not
--*                       being stored in a string_frame list element.
--*
--*                       After the data has been validated, it is
--*                       inserted into the application's linked list of
--*                       elements (that inherits from BAULKREC).
--*                       The "change_node" method (from the accordion
--*                       field popup) is invoked to change the
--*                       data into the data column.
--*
--*                       If the accordion field list panel has been
--*                       redefined due to additional columns in the
--*                       DTL, then this class must be redefined in
--*                       the following ways:
--*                          1. Redefine the 'accord' attribute to
--*                             be of the redefined BAUPACCF type.
--*                          2. Rename and redefine App_Validate.  Add
--*                             string parameters for the additional
--*                             data in the object.
--*                          3. Redefine Validate to do 'read_data_entry'
--*                             for all the data entry fields on the
--*                             popup.  Then should do the same things
--*                             as BAUPCHGP validate.
--*                          4. Redefine Init to 'read_data' from the
--*                             input list_node and assign the data to
--*                             the data entry fields.
--*                             (To initialize them.)
--*
--* MODULE TYPE:          Panel
```

28

```
--*
--* EXTERNAL REFERENCES:
--*                        Inherited Classes
--*                            BAUPOPAN     popup_panel_class
--*
--*                        Client Classes
--*                            BAOSESSM     Session_Metaclass
--*                            BAUDLND      Dyn_List_Nd_Class
--*                            BAULKREC     Disp_Lnk_Nd_class
--*                            BAUPACCF     Accord_Field_Class
--*                            BAUSF        STRING_FRAME
--*                            PD1REF       Reference_Dsgntr
--*                            XABOOL       boolean
--*                            XAFRAME      FRAME_CLASS
--*                            XALNKLST     Link_List_Cls
--*                            XALONG       LONG
--*                            XARCODE      Return_Code_Class
--*                            XASTRING     STRING
--*
--*                        Non-Product Manager Modules
--*                            None
--*
--* EFFECTIVITY:           Effective
--*
--* USAGE:                 PS
--*
--* UNIT OF WORK:
--*    GLOBAL INSTANCE:    NO
--*    COMMIT:             NO
--*    DISCARD:            NO
--*    MOVE OBJECT:        NO
--*    NEW:                NO
--*    NOTIFY:             NO
--*    ROLLBACK:           NO
--*    START:              NO
--*    SWITCH:             NO
--*
--* ISSUES ACTIVITY:
--* REFERENCE   DATE      PERSON   DESCRIPTION
--* ----------  --------  -------- --------------------------------------
--*
--*
--* CHANGE ACTIVITY:
--* REFERENCE   DATE      PERSON   DESCRIPTION
--* ----------  --------  -------- --------------------------------------
--*             09/24/89 MN        Created class.
--*             12/19/89           Moved Change_Field from instance
--*                                attribute to a local  variable on
--*                                Validate.
--* PTR9009806 01/02/90 BJB        Changed
--*            01/19/90 BJB        App_validate now effective and sets
--*                                OK = TRUE.
--* DCR90404.2 03/16/90 SA         Added prolog.
--*******************************************************************

-- EXPORT
```

```
1 ┌                                                                          ┐72
       -- app_validate,              --* defined below
       -- assign_dtl_file,           --* inherited from BAUPANEL
       -- create,                    --* defined below
       -- display_popup,             --* inherited from BAUPOPAN
       -- validate;                  --* defined below

     --INHERIT Popup_panel_class;             --\CLS.BAUPOPAN\
       --RENAME parent_create renames create;
       --RENAME parent_init renames init;
       --REDEFINE validate, dtl_file_name;

     --CLASS ATTRIBUTES
         dtl_file_name : STRING(DTL_NAME_SIZE) := "UIQ0005";
                                    --\ATR.dtl_file_name.XASTRING\

         --* USAGE:  PS
         --* The Dialog Tag file name

     --INSTANCE ATTRIBUTES
         Accord : Accord_Field_Class;  --\ATR.Accord.BAUPACCF\
         --* USAGE:  II
         --* the previous level's popup (the accordion field popup)
         --* whose node is changed.
         Listx : Link_List_Cls;          --\ATR.Listx.XALNKLST\
                                         --\ATR.Listx.BAULKREC\
         --* USAGE:  II
         --* The list of elements that inherit from BAULKREC,
         --* in which an element is changed.
         Change_Node : Dyn_List_Nd_Class;
                                       --\ATR.Change_Node.BAUDLND\
         --* USAGE:  II
         --* the node that is changed.
         Keyhole : LONG;             --\ATR.Keyhole.XALONG\
         --* USAGE:  II
         --* the first row in the panel when the list of nodes
         --* is refreshed

     --CLASS METHODS

     --*******************************************************************
     --*
     --* METHOD NAME:        create
     --*
     --* DESCRIPTION:        This procedure creates an instance of this
     --*                     change pop-up window.
     --*
     --* METHOD TYPE:        Procedure
     --*
     --* EFFECTIVITY:        Effective
     --*
     --* USAGE:              PS
     --*
     --* SYNTAX:             create(AccField,List,Node_In,FirstRow,Data)
     --*
     --* NOTES:              None
     --*
     --*
   1 └                                                                          ┘72
```

```
1 ┌                                                                    ┐72
--*******************************************************************
procedure create(                          --\MTH.create\
     AccField : in Accord_Field_Class;
                                    --\VAR.AccField.BAUPACCF\
     --* the previous level's popup which is the accordion field popup
     List : in Link_List_Cls;      --\VAR.List.XALNKLST\
                                    --\VAR.List.BAULKREC\
     --* The list of elements that inherit from BAULKREC
     Node_In : in Dyn_List_Nd_Class;  --\VAR.Node_In.BAUDLND\
     --* the node that is changed.
     FirstRow : in LONG;           --\VAR.FirstRow.XALONG\
     --* the first row on the accordion field popup
     --* when it's refreshed.
     Data : in STRING)             --\VAR.Data.XASTRING\
     --* data to be displayed on change popup;

     <*(* Create an instance of the popup *)*> is

begin
--LOGIC

     SELF.parent_create(&(*Instance));
     (*Instance).baupchgp_i_init
               (AccField, List, Node_In, FirstRow, Data);


end create;


--INSTANCE METHODS
--*******************************************************************
--*
--* METHOD NAME:          app_validate
--*
--* DESCRIPTION:          This procedure assigns the data from the pop-up
--*                       window into the string_frame list element.
--*
--* METHOD TYPE:          Procedure
--*
--* EFFECTIVITY:          Deferred
--*
--* USAGE:                PS
--*
--* SYNTAX:               app_validate(Field_to_Validate,Chg_Element,OK)
--*
--* NOTES:                This method should be removed and redefined to
--*                       add validation of the data.  If the list
--*                       element is not a string_frame then just
--*                       completely redefine this method to do the
--*                       correct assignment and any validation.
--*
--*                       If there is more than 1 data entry field,
--*                       then add string parameters for the data for
--*                       each additional field.
--*
--*******************************************************************
procedure app_validate (            --\MTH.app_validate\
                                                                    ┘72
1 └
```

```
                Field_to_Validate : in out STRING;
                                    --\VAR.Field_to_Validate.XASTRING\
                  --* The data entered in the field that
                  --* needs to be validated
                Chg_Element : in out String_Frame;
                                    --\VAR.Chg_Element.BAUSF\
                  --* The accordion field element which is
                  --* inserted into the linked list (the linked
                  --* list that inherits from BAULKREC)
                OK : out BOOLEAN)        --\VAR.OK.XABOOL\
                  --* Indicates if the validate is successful.

                <*(* Validate the data field and do necessary
                        assignment *)*> is

                  --* This method should be redefined by the application
                  --* if validation is needed for the data field.

                  --* Convert the entered data(Field_To_Validate) into
                  --* whatever type of data necessary, so that the element
                  --* that inherits from BAULKREC in the application linked
                  --* list (declared as as a local variable) can be changed.
                  --* The conversion can be done before or after validating
                  --*  the entry field.
                  --* If the validate was successful, assign set OK to TRUE.
                  --* If the validate failed, set OK to FALSE


                  --* This is a template method

                  --* Local Variables
                  --* Element : type of element, for example
                  --* Ref_Des : Reference_Dsgntr;   --\VAR.Ref_Des.PD1REF\

                  --* RC : RETURN_CODE_CLASS;        --\VAR.RC.XARCODE\
                  --* Session : Session_Metaclass;  --\VAR.Session.BAOSESSM\

          --LOGIC
              begin
                (*Chg_Element).assign(Field_to_Validate);
                *OK := TRUE;

                --* APP STUFF
                --* do the necessary validation
                --* Assign the Chg_Element to whatever type it is
                --* i.e. Ref_Des := Chg_Element;
                --* if (the validate is successful) then
                --*    convert the string data (Field_To_Validate)
                --*    to whatever type applicable...
                --*    For example:
                --*    The displayable attribute of Ref_Des is Ref_Dsgntr,
                --*    which is an NLS_STRING, so the data field (which
                --*    is a string) is assigned to an NLS_STRING
                --*    Ref_Des.Ref_Dsgntr.assign(Field_To_Validate,
                --*                    Session.Session_CCSID, RC);
                --*    if (RC.ok) then
```

```
                                                                          ¬72
1 ┌
      --*      do other assignments to the new element if necessary
      --*      OK := TRUE;
      --*    else
      --*      OK := FALSE;
      --*    end if;
      --* else --* if the validate is not successful
      --*    OK := FALSE;
      --* end if;

      --* Again, this is just a template and the application's
      --* implementation can differ.

  end app_validate;


  --*****************************************************************
  --*
  --* METHOD NAME:        init
  --*
  --* DESCRIPTION:        This procedure initializes the pop-up window.
  --*
  --* METHOD TYPE:        Procedure
  --*
  --* EFFECTIVITY:        Effective
  --*
  --* USAGE:              PS
  --*
  --* SYNTAX:             init(AccField,List,Node_In,FirstRow,Data)
  --*
  --* NOTES:              Redefine if there is more than 1 data entry
  --*                     field on this panel.  Should read the data
  --*                     from the input list node and assign it to
  --*                     the data entry fields.  Also, should do the
  --*                     processing done in this init method.
  --*
  --*****************************************************************
  procedure init(                         --\MTH.init\
      AccField : in Accord_Field_Class;
                                    --\VAR.AccField.BAUPACCF\
      --* the parent popup in which an element is changed
      List : in Link_List_Cls;      --\VAR.List.XALNKLST\
                                    --\VAR.List.BAULKREC\
      --* The list of elements that inherits from BAULKREC
      --* in which an element is changed.
      Node_In : in Dyn_List_Nd_Class;  --\VAR.Node_In.BAUDLND\
      --* the node that is changed.
      FirstRow : in LONG;           --\VAR.FirstRow.XALONG\
      --* the first row on the accordion field popup
      Data : in STRING)             --\VAR.Data.XASTRING\
      --* data displayed on the change popup

      --* This method needs to be renamed and redefined if the
      --* application changes any Dialog Tag names.

      <*(* Initialize the popup instance *)*> is

1 └                                                                       ┘72
```

33

```
1                                                        72
        --* Local Variables
   begin
   --LOGIC

       Accord := AccField;
       Listx := List;
       Change_Node := Node_In;
       Keyhole := FirstRow;
       SELF.assign_data_entry("CHGFLD", Data);

   end init;

   --*******************************************************************
   --*
   --* METHOD NAME:        validate
   --*
   --* DESCRIPTION:        This procedure validates the data entered
   --*                     and updates the accordion field list with
   --*                     the changes.
   --*
   --* METHOD TYPE:        Procedure
   --*
   --* EFFECTIVITY:        Effective
   --*
   --* USAGE:              II
   --*
   --* SYNTAX:             validate(ok)
   --*
   --* NOTES:              If there is more than 1 data entry field
   --*                     on this popup, then this method must be
   --*                     redefined to read all the data entry fields
   --*                     and pass the data into change_node.
   --*
   --*******************************************************************
   procedure validate(                    --\MTH.validate\
       ok : out BOOLEAN)                   --\VAR.ok.XABOOL\
           --*  If true then the field is valid, false
           --*  otherwise

       <*(* Validate the data entered and if it's valid, change
              where specified in the accordion field popup
              list. *)*> is

       --* Local Variables
       Row : LONG;                        --\VAR.Row.XALONG\
       --* used to find the row number of the new element
       Chg_Element : Frame_Class;    --\VAR.Chg_Element.XAFRAME\
       --* The accordion field element that is changed in
       --* the linked list
       Change_Field : STRING(DTL_LONGEST_SIZE);
                                          --\VAR.Change_Field.XASTRING\
       --* the data read from the entry field

   begin
   --LOGIC

1                                                        72
```

```
1                    <*(* Get the data from the popup *)*> is
                         SELF.read_data_entry("CHGFLD", &Change_Field);
                         --* read the data in the entry field
                         Change_Node.tag.notify;
                         --* bring the underlying object up to the current UOW level
                         --* so changes can be committed or rolled back
                         Chg_Element := Change_Node.tag;
                         --* assign the object reference of the underlying object
                         --* of the node to Chg_Element
                         SELF.app_validate(&Change_Field, &Chg_Element, ok);
                         --* Call the application validate to validate
                         --* this field, and change the element in the
                         --* application list
                         if (*ok) then
                            --* the field is valid. Change the data of
                            --* the node in the accordion field popup.
                            Accord.change_node(Change_Node, Keyhole, Chg_Element,
                                                          &Change_Field);

                            <*(* Pass back the fact that a change was made. *)*> is
                              parent.set_recog_this_chg(TRUE);
                            else
                               <*(* NOP *)*>;
                            end if;

     end validate;

     end Acc_Change_Popup;
```

From the foregoing description of a preferred embodiiment of this invention, it will be apparent that there has been provided a novel method for displaying multiple entry data fields on a computer video display in an object oriented software program. While described in connection with the preferred embodiments referred to herein, it is clear that the use of this method in connection with other applications will be apparent to those skilled in the art.

## Claims

1. A method for displaying multiple entry data fields on a video screen in an object oriented software program comprising the steps of:
   displaying a list of one or more multiple entry data fields;
   selecting a multiple entry data field from said list of multiple entry data fields;
   opening said selected multiple entry data field;
   displaying a list of all data entries contained within said selected multiple entry data field;
   selecting a data entry from said data entries list;
   displaying a list of operations to be performed on said selected data entry;
   selecting an operation to be performed on said selected data entry;
   performing said selected operation on said selected data entry;
   returning to said list of multiple entry data fields.

2. A method according to claim 1 wherein each multiple entry data field comprises a record including a plurality of fields.

3. A method according to claim 1 further comprising the steps of:
   selecting a change operation from said list of operations to be performed on said selected data

35

entry; and

changing said data entry.

4. A method according to claim 1 further including the steps of:

selecting an add operation from said list of operations; and

adding a new data entry to said list of data entries.

5. A method according to claim 4 further including the step of:

locating the position in said data entry list for said new data entry.

6. A method according to claim 1 further including the steps of:

selecting a delete operation from said list of operations to be performed on said selected data entry;

and

deleting said selected data entry from said list of data entries.

*24* *26*

| File | Edit | View | Help |
|------|------|------|------|

ERE5002      Request for Engineering Action

*12*

REA number ............................. ————————
REA name ................................. ————————
Status ...................................... ————————
Security level .......................... ——
Security catagory ..................... ——
Date submitted .......................... _J__J__
Originator ................................. ————————
Originator location ................... ————————
Coordinator .............................. ————————
Priority .................................... ——
Type ......................................... ————

*14*
     _ 1. Products affected *16* *18*
         2. Item.Ecs affected
         3. Planned change numbers *20*
         4. Reason codes *22*

F1=Help   F2=Set 2   F3=Exit   F10=Actions   F12=Cancel

*10*

# FIG 1

*16*       *30*

ERE5003    Products Affected   ————

| PARTS | ENGINEER | STATUS |
|-------|----------|--------|
| A1 | A. Jones | O.K. |
| B67895 | B. Smith | O.K. |
| Pamela4 | C. Johnson | Pending |
| Gertrude6 | D. Williams | Released |

*34*   *32*   *38*

F1=Help   F4=Add   F5=Delete   F6=Change   F12=Cancel

*34*      *40*    *36*

# FIG 2

**FIG 3**

**FIG 4**

*70*

**Ec Header**

Ec Number_ [ ]        *72*
        Multi-Entry Fields
    _1. Customer ———— *74*
    2. Related Changes

Select/Enter ↑   ↓ File/Open        *76*        Select/Change        *82*

**Old Date Filled in**

**Customer**

*77*

Name                          Address

_1. AAA and Co.               123 Oak Lane
                              Atlanta, GA 30300

2. BB Corporation             456 Westwood Drive
                              Atlanta, GA 30300

3. CCC and Sons               77 Technology Square
                              Atlanta, GA 30300

4. DDD, Inc.                  890 River Edge Parkway
                              Atlanta, GA 30300

Enter

Select/Add

*84*   *88*   *80*        *86*
*78*
    Add  Delete  Change  Fwd  Bkwd  Help  Cancel

Select/Delete        Enter        **Blank Field**

# FIG 5